Europäisches Patentamt

European Patent Office

Office européen des brevets

(11) Publication number: **0 305 568**
**A1**

## EUROPEAN PATENT APPLICATION

(21) Application number: 87112801.3

(22) Date of filing: 02.09.87

(51) Int. Cl.⁴: **H02K 9/06** , **F04D 25/08** ,
**F04D 29/32**

(43) Date of publication of application:
**08.03.89 Bulletin 89/10**

(84) Designated Contracting States:
**AT BE CH DE ES FR GB GR IT LI LU NL SE**

(71) Applicant: **Stanley, Louis**
**Taglieberstrasse 6/7/8**
**1230 Wien 23(AT)**

(72) Inventor: **Stanley, Louis**
**Taglieberstrasse 6/7/8**
**1230 Wien 23(AT)**

(74) Representative: **Greenstreet, Cyril Henry et al**
**Haseltine Lake Partners Motorama Haus 502**
**Rosenheimer Strasse 30**
**D-8000 München 80(DE)**

(54) **Rotary fans.**

(57) A rotary fan comprises a circular rotor body (1) mounted on a spindle (4) and having blades (7) integral with the body and arranged around its perimeter, each blade comprising a stem (8) extending radially from the rotor body and having at least one lobe (9) extending circumferentially of the rotor body and spaced from the perimeter thereof.

Fig. 1.

EP 0 305 568 A1

## Rotary fans.

This invention relates to rotary fans, and more particularly to fan-rotors for electrical machines such as motors and generators.

To provide a generally axial flow of air for cooling rotary electrical machines such as motors and generators, it has been proposed to form fins on the faces or the circumferential surface of the rotor. The fins are cast in the faces of aluminium end rings or around the circumference of an annular aluminium casting surrounding the magnetic body of the rotor. This however gives rise to considerable manufacturing difficulties, since complicated moulds are required in the casting process.

According to the invention a rotary fan comprises a circular rotor body mounted on a spindle and having blades integral with the body and arranged around its perimeter, each blade comprising a stem extending radially from the rotor body and having at least one lobe extending circumferentially of the rotor body and spaced from its perimeter. Advantageously there are two such lobes, one on each side of the radial stem, The inner and outer edges of the lobes preferably run substantially circumferentially of the rotor body, so that the lobes form separated sectors of an annulus spaced from the perimeter of the rotor body. The blades should of course be arranged round the rotor body so that the fan is balanced.

In one embodiment of the invention the blades extend outwards from the outer perimeter of the rotor body. If the rotor body is of annular form the blades may extend inwards from its inner perimeter or both outwards and inwards from the respective perimeters. When the blades extend inwards the rotor body may be connected to the spindle by a spider, the spokes of which form the radial stems of the blades from which the lobes extend circumferentially.

The fan may be made by casting or be cut or punched from sheet material. The blades may be formed with their lobes initially in the plane of the rotor body, and then twisted around the radial stem, e.g. by pressing between upper and lower jigs carrying pins to bend the lobes upwards or downwards to the desired blade shape. Alternatively, when the fan is made by casting, the lobes may be cast initially at the desired inclination to the plane of the rotor.

Conveniently the blades are inclined at an angle of about 15° to about 45° to the plane of the rotor. An angle of 45° is particularly suitable for reversible rotors, such as are used in fans for ventilating rooms or other enclosed spaces that can either exhaust air or suck it in.

When the blades are formed with two lobes these may be identical and arranged symmetrically with respect to the stem. The leading and trailing lobes may however be made of unequal lengths, particularly when the fan is only to be rotated in one direction. For particularly quiet operation the surface of the lobes may be curved so as to scoop up the air as the fan rotates.

In one embodiment of the invention the rotor body of the fan comprises the rotor of an electrical machine, being made of magnetic material or, in the case of an induction motor, e.g. of copper or aluminium sheet.

The invention will now be described in more detail, by way of example, with reference to the accompanying diagrammatic drawings, in which:

Fig. 1 is a plan view of a rotor for an electrical machine having fan blades arranged around its outer perimeter according to the invention;

Fig. 2 is a section on the line I - I in Fig. 1;

Fig. 3 is a plan view of a rotor similar to that of Fig. 1 but also having a ring of blades around its inner perimeter;

Fig. 4 is a sheet metal rotor for an induction motor, having an outer ring of blades.

Fig. 5 is a plan view of a rotor or fan in which the lobes are of unequal length; and

Fig. 6 is a radial view of a blade in which the lobes are formed to a curved surface.

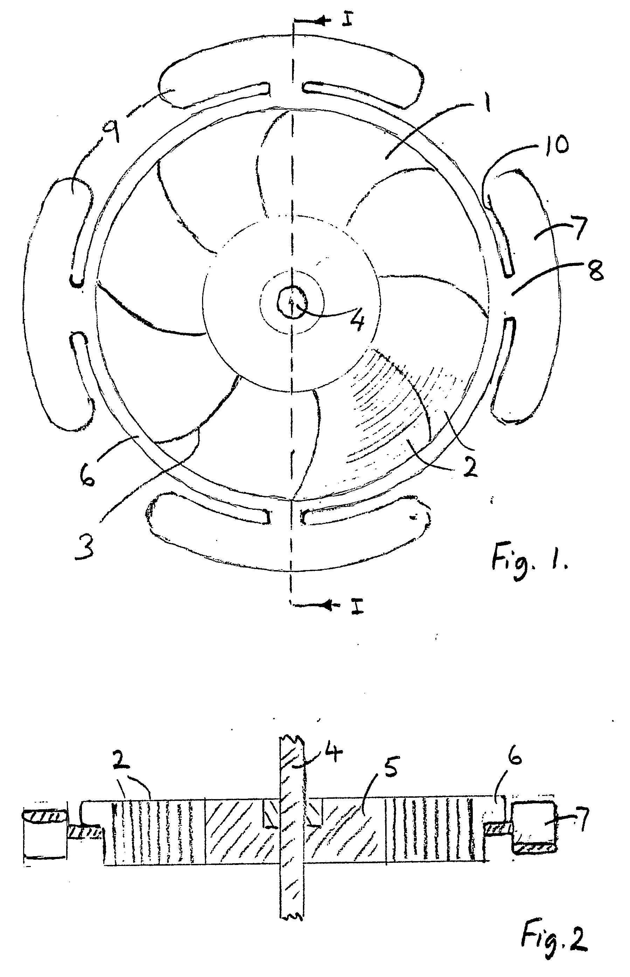

In the embodiment shown in Figs. 1 and 2, a rotor for an electrical machine comprises a magnetic core 1 formed by spirally winding a continuous strip of electrical steel into the form of an annulus. The steel strip is provided with slots extending inwards from one edge spaced so that when the strip is wound they cooperate to form generally radial slots 3 on a face of the core.

The core and a spindle 4 are placed in a mould and aluminium is cast around them so as to fill the slots and the space 5 between the core and the spindle, and also to form a ring 6 around the outer perimeter of the core, with extending therefrom a set of blades 7 arranged uniformly around the ring. The core embedded in the aluminium forms the rotor body. Each blade is of thin section, e.g. about 2 to 3 mm thick. and comprises a radial stem 8 and two circumferential lobes 9. The inner edges 10 of the lobes are spaced from the perimeter of the rotor body, and the inner and outer edges lie on circles coaxial with the rotor body.

For the simplest construction of the casting moulds, the blades are cast in the plane of the rotor and are subsequently inclined to the plane by bending one lobe of each blade upwards and the other downwards so as to twist the blade about the axis of the stem to the desired inclination to the rotor plane. Alternatively the blades may be cast in the inclined form. Both casting to shape and shaping by bending are facilitated by spacing the lobes from the perimeter of the rotor body. Fillets may be provided above or below the stem to strengthen the stem.

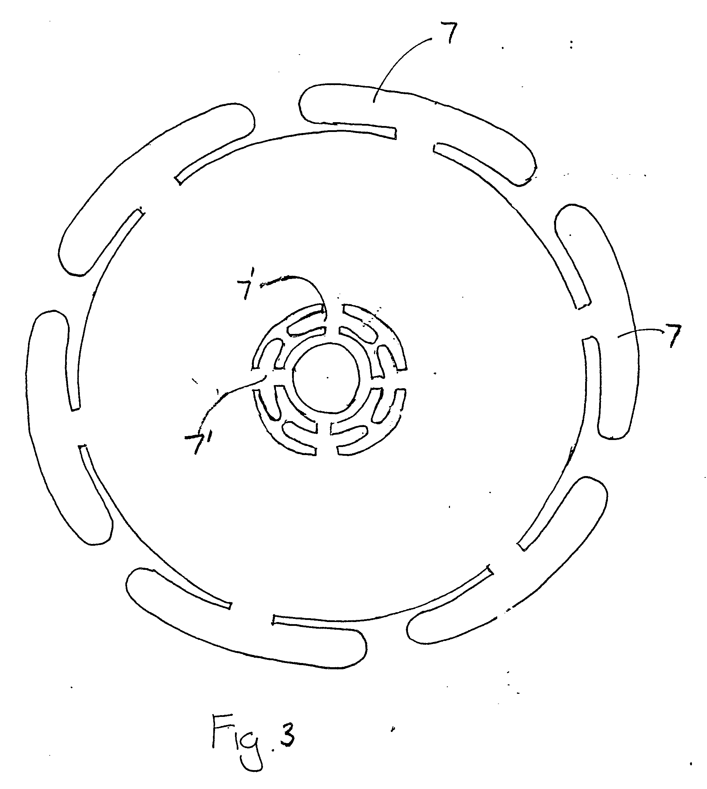

In the rotor shown in Fig. 3, an inner ring of fan blades 7' is also formed between the spindle and the inner perimeter of the core and integral therewith. In the casting process a central hub around the spindle is connected to a ring 11 of aluminium cast around the inner perimeter of the core by a spider forming the stems of the blades, with lobes extending circumferentially on either side of each stem, and the outer edges of the lobes being spaced from the inner perimeter of the rotor body. Again the desired inclination of the blades may be produced during casting or by subsequent bending.

It will readily be seen that when a fan rotor according to the invention is mounted coaxially with a stator or stators of an electrical machine, e.g. of the axial flux type, the rotor produces a generally axial air stream outside or inside the rotor, or both, which serves to dissipate the heat generated and cool the machine.

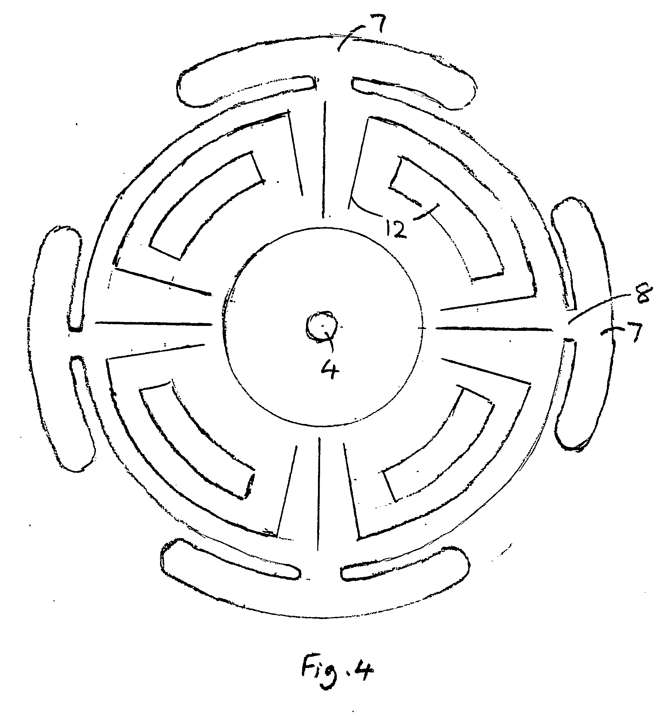

The rotor shown in Fig. 4 is for an induction motor. It consists of a sheet of metal, e.g. copper or aluminium, that is provided with suitable slots and/or cutouts 12 arranged in any desired manner to achieve desired magnetic effects, i.e. to form a plurality of short-circuited conductors, and is provided in addition with fan blades arranged around its outer perimeter and shaped as described above. Two or more such sheets laminated together may be used, in such case the fan blades may be formed on one or more of them as desired. Again, the rotor shown may be modified by forming the fan blades alternatively or in addition, around an inner perimeter, between the rotor body and a central spindle. Fan rotors of this construction may readily be made by laser cutting or by punching or stamping from sheet metal, the desired inclination of the fan blades being produced simultaneously or subsequently by bending the lobes of the blades, e.g. by pressing.

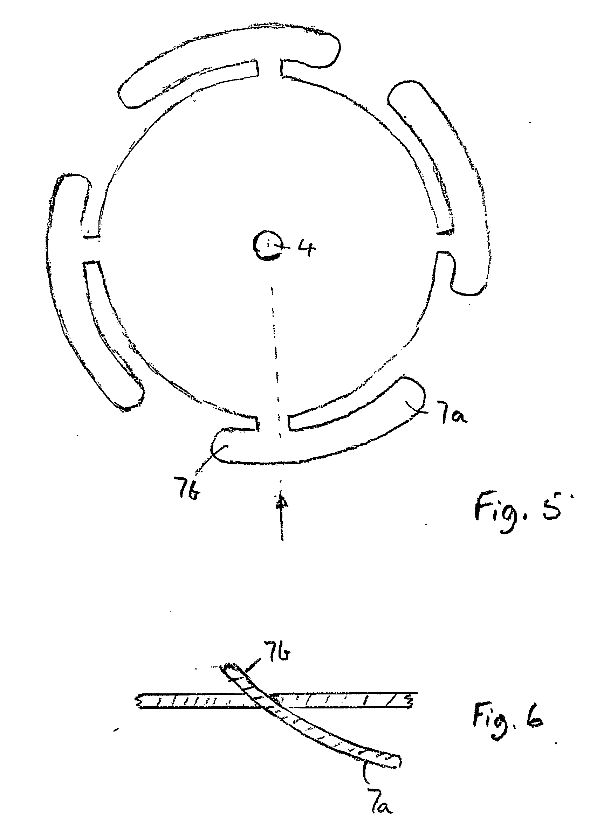

In the fan shown diagrammatically in Fig. 5 the lobes are of unequal lengths, the leading lobes 7a being longer than the trailing lobes 7b. Fig. 6 is a view in the direction of the arrow in Fig. 5 showing a curved or radiused blade section.

## Claims

1. A rotary fan comprising a circular rotor body mounted on a spindle and having blades integral with the body and arranged around its perimeter, each blade comprising a stem extending radially from the rotor body and having at least one lobe extending circumferentially of the rotor body and spaced from the perimeter thereof.

2. A rotary fan according to claim 1 wherein each blade has two lobes, on opposite sides of the stem.

3. A rotary fan according to claim 1 or claim 2, wherein the leading and trailing lobes of the blades are of unequal length.

4. A rotary fan according to any preceding claim wherein the inner and outer edges of the lobes run substantially circumferentially of the rotor body, so that the lobes form separated sectors of an annulus spaced from the perimeter of the rotor body.

5. A rotary fan according to any preceding claim, wherein the blades extend outwards from the outer perimeter of the rotor body.

6. A rotary fan according to claim 5, including a set of blades between the inner perimeter of the rotor body and the spindle.

7. A fan-rotor for an electrical machine comprising a rotary fan according to any preceding claim wherein the rotor body comprises a core of magnetic material.

8. A fan-rotor according to claim 7 wherein the blades are cast integrally with the core and spindle.

9. A fan-rotor according to claim 7 or claim 8 wherein the core comprises an annulus of spirally wound, slotted strip.

10. A fan-rotor for an induction motor comprising a sheet metal fan according to any one of claims 1 to 6, wherein the rotor body is slotted and/or cut out to form a plurality of short-circuited conductors.

11. A method of making a fan or fan-rotor according to any preceding claim that includes the steps of forming the fan blades in the plane of the rotor body and then inclining them to the plane by bending the lobes.

3.

Fig. 1.

Fig. 2

Fig. 3

Fig. 4

Fig. 5

Fig. 6

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | FR-A-2 394 199 (WESTINGHOUSE)<br>* page 4, line 6 - page 6, line 35; figures 1-4b * | 1,5,7,8 | H 02 K 9/06<br>F 04 D 25/08<br>F 04 D 29/32 |
| A | DE-A-3 324 076 (BOSCH-SIEMENS)<br>* page 5, line 23 - page 6, line 14; page 9, line 23 - page 10, line 15; figure 4 * | 1,7,8 | |
| A | US-A-4 028 007 (E.V. CAVAGNERO et al.)<br>* column 1, line 60 - column 3, line 5; figures 1-3 * | 1,2,10,11 | |
| A | US-A-2 823 889 (STALKER)<br>* figure 4 * | 1-4 | |
| A | DE-B-1 067 518 (LICENTIA)<br>* whole document * | 1-5 | |
| A | US-A-2 687 249 (PAPANEK et al.)<br>* column 2, lines 9-28; figures 1-3 * | 1,10,11 | TECHNICAL FIELDS SEARCHED (Int. Cl.4) |
| A | GB-A-1 029 507 (WESTINGHOUSE)<br>* page 1, line 90 - page 2, line 125; figures 1-5 * | 1,6,7,9 | F 04 D 25/00<br>F 04 D 29/00<br>H 02 K 9/00 |

The present search report has been drawn up for all claims

| Place of search | Date of completion of the search | Examiner |
|---|---|---|
| BERLIN | 15-05-1988 | NORDSTROEM U.L.N. |